# EUROPEAN PATENT SPECIFICATION

(11) **EP 1 729 550 B1**
(45) Date of publication and mention of the grant of the patent: **16.09.2015**
(21) Application number: 06114302.0
(22) Date of filing: 22.05.2006
(51) Int. Cl.: H05G 2/00, G02B 27/00

(54) **Arrangement and method for protecting an optical component, particularly in an EUV source**
Vorrichtung und Verfahren zum Schutz eines optischen Bauteils, inbesondere in einer EUV Quelle
Dispositif et procédé de protection d'un composant optique, en particulier dans un source à rayonnement EUV

(30) Priority: 31.05.2005 DE 102005024963; 23.09.2005 DE 102005045568
(43) Date of publication of application: 06.12.2006
(73) Proprietor: Koninklijke Philips N.V., 5656 AE Eindhoven (NL); Philips Intellectual Property & Standards GmbH, 20099 Hamburg (DE); Fraunhofer-Gesellschaft zur Förderung der angewandten Forschung e.V., 80636 München (DE)
(72) Inventor: Neff, Willi, 4721 Kelmis (BE); Loeken, Michael, 52428 Juelich (DE)
(74) Representative: Verweij, Petronella Danielle

(56) References cited:
- WO-A-2005/025280
- DE-A1- 10 233 567
- US-A- 4 186 305
- US-A- 4 408 338

## Description

### FIELD OF THE INVENTION

The present invention relates to an arrangement and a method for protecting an optical component in or on a process chamber, particularly for protecting an optical component in or on an EUV source.

It is precisely when optical components are used in process chambers that their protection against fouling has an important role to play. The optical function of the optical components is adversely affected by any fouling during the process, which means that they have to be exchanged or cleaned after only a short time. An example of this is provided by optical components on or in a radiation source for EUV or soft X-ray radiation that produces radiation in the wavelength range from 1 nm to 20 nm. EUV sources are required particularly in the field of EUV lithography or of metrology.

Known EUV sources make use of the radiation emitted by a hot plasma that is produced in a process chamber by a pulsed current from an electrode system, as described in, for example, DE 103 42 239 A 1. An example of an optical component protected by an orificed mask can be found, for example, in US 4 186 305 A1.

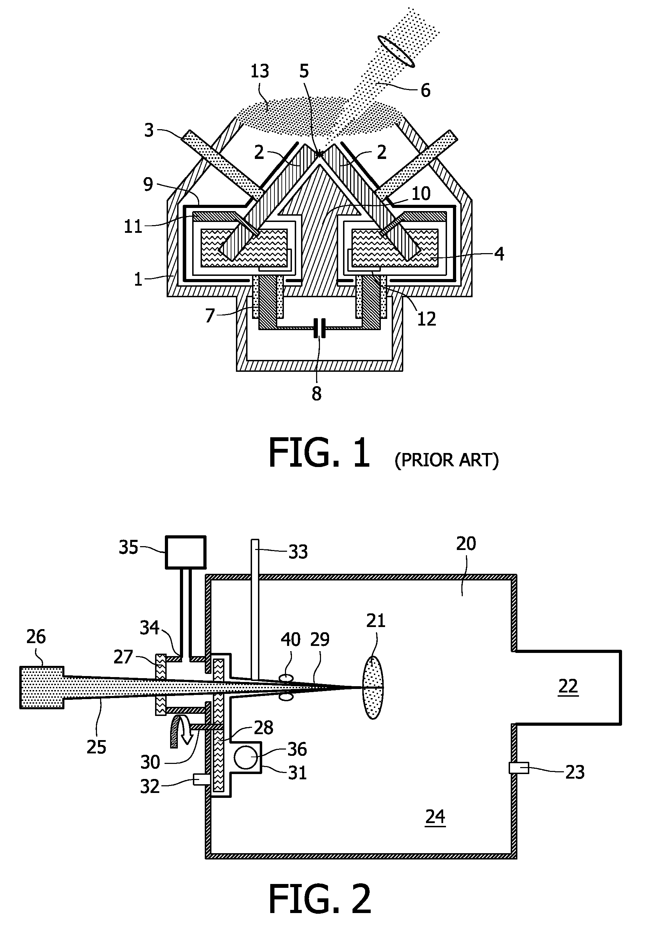

Fig. 1 shows an example of an EUV source of the kind known from DE 103 42 239 A1. The production of the hot plasma takes place in this case between two electrodes 2 in disc form that are mounted to be rotatable and that are driven in rotation during the production of the radiation by means of their two rotary shafts 3, which latter are composed of an insulating material. Parts of the two electrodes 2 dip into respective temperature-controlled baths 4 of a liquid metal, such as tin for example. The metal is kept at an operating temperature above its melting point, which in the case of tin means above a temperature of 230°C, and preferably at 300°C. For the temperature control of the baths of metal 4, the associated containers each have an appropriate temperature-control means 12. Due to the rotation of the electrodes, a thin (0.5 - 40 µm) film of the liquid metal forms on their surfaces. At the point of closest approach between the two electrodes 2, a small amount of the metal is vaporized by a laser pulse 6 that is coupled in. This vapor bridges the gap between the electrodes and makes possible a local pulsed gas discharge that heats and ionizes the vapor and emits the EUV radiation. Because of the rotation of the electrodes, the surface of the electrodes that is placed under stress by the gas discharge is constantly renewed, which means that, advantageously, no wear takes place to the basic material of the electrodes. The pulsed current required for the production of the plasma is fed to the electrodes 2 via the two baths of metal 4, which are connected, via suitably insulated infeeds 7, to a bank of capacitors 8. Additional screens 9, 10, which make it possible for a proportion of the vaporized metal to be fed back into the baths 4, can also be seen in the Figure. To ensure that the film of metal 5 on the electrodes 2 is of an even thickness, wipers 11 are also provided. The entire arrangement is arranged in a vacuum chamber, which acts as a process chamber and of which Fig. 1 shows only part. What is thereby achieved is the maintenance of a base vacuum of 10⁻⁴ hPa such as is advantageous for the production of the plasma. Because of this base vacuum, a high voltage of, for example, 2-10 kV may be applied to the electrodes 2 without an uncontrolled electrical flashover occurring. Instead, the flashover is only triggered at the desired point by the laser pulse 6.

However, one result of the vaporization of the metallic material that is required with a radiation source of this kind is that in time all the surfaces situated in the vicinity of the vaporizing source become coated with a thin film of metal. This applies above all to the window that is required in the wall of the process chamber for the coupling-in of the laser pulse. Because of the deposit of metal, this window, in time, no longer has the requisite transparency, which means that an increasing proportion of the laser light is absorbed in the layer of metal and in the end there is no longer sufficient laser energy to trigger the plasma discharge. There may be other windows, which are required for diagnostic purposes for example, or other optical components arranged inside the process chamber, and these too are made unusable in time for this reason, and the EUV source therefore has to be maintained frequently.

To reduce the amount of metal vapor that diffuses into other regions from the vaporizing source, a foil trap 13 is used in the EUV source of Fig. 1, but this is unable to capture all the metal vapor. Also, the foil trap is designed to protect the optical components for guiding the EUV radiation and does not always protect the coupling-in and/or diagnostics windows, which may be situated at other points in or on the process chamber.

On the basis of this prior art, it is an object of the present invention to specify an arrangement and a method for protecting optical components in or on a process chamber that are particularly suitable for protecting coupling-in and/or diagnostics windows.

This object is achieved with the arrangement claimed in claim 1 and the method claimed in claim 16. Advantageous forms of the arrangement and method form the subject of the dependent claims or can be seen from the following description and from the embodiments.

The present arrangement for protecting an optical component, through which optical component optical radiation passes or by which optical component optical radiation is produced or reflected, comprises an optical plate that is arranged in front of the optical component and that is transparent to the optical radiation, and an orificed mask that is arranged in front of the optical plate and that has an orifice through which a region of the surface of the optical plate is exposed on a preset axis of the beam of optical radiation. In the arrangement, remaining regions of the surface of the optical plate are covered, on the orificed-mask side, by the orificed mask and/or by other screening elements for protecting against fouling. The optical plate is so mounted to be movable in translation and/or rotation, and is so coupled to a drive, that different regions of the surface are exposed in succession through the orifice of the orificed mask as a result of continuous or step-by-step movement of the optical plate. In the associated method, the optical plate is, therefore, so moved in translation and/or rotation that from the optical plate different regions of its surface are exposed in succession through the orifice of the orificed mask, to allow the fouling to be distributed over a larger area. The orifice of the orificed mask must of course be selected in this case to be sufficiently large to ensure that the optical component still performs the requisite function. In a case where a laser beam passes through the optical component, the orifice of the orificed mask will be selected to be sufficiently large to allow the laser beam to pass through the orificed mask unobstructed. In a case where the optical component is in the form of a diagnostics window, the orifice of the orificed mask must be selected to be large enough to enable the requisite examination to take place through the optical component, the optical plate and the orifice of the orificed mask. The optical plate must also be selected to be sufficiently large for the drive to cause different regions of its surface to be exposed in succession through the orifice of the orificed mask. This requires the optical plate to be of an area that is a multiple of the area of the orifice of the orificed mask. In a simple embodiment, the orificed mask may in this case take the form simply of a sheet of metal having a hole.

The optical component may be a component of a vast variety of types, such as for example a lens, prism or mirror, or even a light source. In the preferred embodiment of the present arrangement and of the associated method, it is an optical window through which the optical radiation passes. In this case the optical plate must be transparent to the optical radiation in the same way as the optical component is in the case of the window. The optical plate may for example be a plate of glass, quartz or, depending on the application, even of a plastics material. The optical plate is advantageously of appreciably larger extent than the optical component itself so that it completely covers the latter.

As a result of the continuous or step-by-step movement of the optical plate during the operation of the arrangement, it is only that region of the plate that has just been exposed at the time through the orifice of the orificed mask that will be fouled by material making its way through the orifice of the orificed mask. When the fouling does so, it will distribute itself over the area of the optical plate that can be reached due to the movement, which means that an appreciably extended life or an appreciably longer maintenance interval will be obtained in comparison with a design not having the present arrangement. It is precisely when the present arrangement is used in an EUV source to protect the coupling-in window for the laser pulses triggering the gas discharge that an appreciable lengthening can be achieved of the period for which the EUV source is able to operate between two maintenance operations. The characteristics of the laser pulses are not changed so quickly by absorption or reflection, and the operation of the EUV source is stable even for quite long periods. The reduced absorption of the laser pulses by the entry window also makes it possible for lasers giving pulses of lower energy to be used and thus helps to reduce costs. When a diagnostics window, such as for example one for observing the discharge visually by means of cameras, is being protected, the diagnostics application is likewise less severely interfered with when the present arrangement and the associated method are used.

The optical plate preferably takes the form of a disc that is symmetrical in rotation and that is mounted to be rotatable or is driven in rotation about an axis of rotation that extends through the disc centrally and perpendicularly thereto. In this embodiment, the fouling is distributed over a region that forms a ring around the axis of rotation.

In a preferred embodiment of the present arrangement and of the associated method, the optical plate is enclosed by a housing that on one side forms the orificed mask having the orifice of the orificed mask and on the opposite side is closed off by the optical component. Part of the housing may be formed by the wall of the process chamber in this case. In this embodiment, fouling is able to make its way onto the optical plate and/or the optical component only through the orifice of the orificed mask.

In an advantageous embodiment, the housing is equipped with at least one gas inlet via which, in the associated method, there is introduced a gas by means of which a flow of gas through the orifice of the orificed mask is produced. This flow of gas, which is directed outwards from the housing through the orifice of the orificed mask, prevents or reduces at least the entry of fouling matter through the orifice of the orificed mask. In the case of the EUV source, the gas may be identical to the working gas for generating the plasma, such as for example argon.

In a further embodiment, there is provided on the housing not only the at least one gas inlet but also at least one gas outlet, which can be or is connected to a vacuum pump. In this embodiment, the life of the optical component and the optical plate may be lengthened still further by admitting into the housing a gas having a cleaning action. The cleaning gas is so selected in this case that it forms, with the fouling deposited on the optical plate, volatile components that, due to their increased vapor pressure, quickly detach themselves again from the optical plate. These volatile components are then extracted from the housing via the gas outlet. What is preferably used in this case is a vacuum pump that, in the region intermediate between the optical component and the optical plate, generates a gas pressure that is lower than outside the housing. This prevents the cleaning gas or the volatile components from penetrating into the process region of the process chamber, such as for example the gas-discharge region of an EUV source. In the case of a metallic fouling material, such as tin for example, it is preferably halogen-containing gases that are fed into the housing as the cleaning gas. With the tin, these form volatile halogen compounds. In addition, both the optical component and the optical plate are preferably heated to an increased temperature, such as for example 150 to 200°C, so that the metal halide that forms will vaporize more quickly.

In the case of metallic fouling such as for example the deposit of tin that has already been mentioned, small amounts of oxygen may convert the deposits into metal oxide. This cannot readily be cleaned off by halogen-containing gases. In an embodiment of the present arrangement and of the associated method, a hydrogen gas by which the metal oxide is reduced is therefore conveyed into the housing initially for cleaning, so that the metal oxide can then be removed by the halogen-containing gas. However, a certain proportion of the hydrogen should, for this purpose, be present in atomic form. This can be achieved by a suitable means for generating radicals in the housing, which means causes a dissociation of molecular hydrogen. Examples of means for generating radicals are a hot tungsten filament at whose surface the molecules are separated thermally, or an additional gas discharge, such as a barrier discharge for example, which likewise splits hydrogen molecules.

In a further embodiment of the present invention, a means for producing a gas discharge is so arranged in the housing that the gas discharge is formed, in the immediate vicinity of that surface of the optical plate that is situated on the orificed-mask side, in a region of the housing that is situated off the axis of the beam and past which move, when the optical plate is moved by the drive, regions of the surface that were previously exposed through the orifice of the orificed mask. As a result of the triggering of this gas discharge close to the surface of the optical plate, ions from the discharge are accelerated towards the surface and, on reaching it, at once sputter the fouling that has deposited off again. By arranging this means in a suitable way, it is possible in this case for that region of the surface of the optical plate that has just been fouled through the orifice of the orificed mask to be cleaned again immediately thereafter. The fouling that is sputtered off is extracted again via a gas outlet on the housing.

In a further embodiment of the present invention, the orificed mask is of a duct-like, funnel-like or conical form, with the duct becoming narrower with increasing distance from the optical plate in the funnel-shaped or conical form. In this way, the entry orifice for the fouling is spaced appreciably away from the optical plate, thus enabling means for reducing the fouling to be provided on the path between the entry orifice and the optical plate.

These means may be implemented on the one hand in the form of a flow of gas that is directed in the direction of the orifice of the orificed mask and to which reference has already been made above, and on the other hand in the form of a means of generating one or more magnetic fields that divert electrons or ions, such for example as electrons or ions of a metal vapor that has penetrated in, onto the walls of the duct. In this way, a proportion of the fouling that has penetrated in is deposited on the walls of the duct and no longer contributes to the fouling of the optical component and the optical plate.

The above advantageous embodiments or refinements of the invention and of the method can also be combined with one another to enable even more improved protection to be provided against fouling.

The preferred use of the present arrangement is in an EUV source, particularly to protect optical entry and/or exit windows in the wall of the process or vacuum chamber that encloses the said radiation source. However, the present arrangement and the associated method can, in principle, also be used in other areas in which optical components have to be protected against fouling caused by a process inside a process chamber.

### BRIEF DESCRIPTION OF THE DRAWINGS

These and other aspects of the invention are apparent from and will be elucidated with reference to the embodiments described hereinafter, without any limitation of the scope of protection defined by the claims.

In the drawings:
Fig. 1 is a schematic view of a prior-art EUV source.
Fig. 2 is a schematic view of an embodiment of the present arrangement in a process chamber, and
Fig. 3 is a schematic view of an example of another embodiment of the present invention.

### DESCRIPTION OF PREFERRED EMBODIMENTS

An illustrative layout for an EUV source, in which the present arrangement and the associated method are preferably employed, has already been elucidated in detail by reference to Fig. 1 in the introduction to the description. This being the case, Fig. 2 shows an illustrative embodiment of the present arrangement in a vacuum chamber 20, in which vacuum chamber 20 an electrode system 21 of an EUV source as shown in Fig. 1 may be set up. The vacuum chamber 20 is connected to a vacuum pump 22 by means of which the base vacuum required for the production of the plasma is set. A working gas 24 that is required for the production of the plasma is introduced into the vacuum chamber 20 via a gas inlet 23.

For the generation of EUV radiation by a radiation source as shown in Fig. 1, it is necessary for a pulsed laser beam 25 that is focused on one of the two electrodes of the electrode system 21, preferably the cathode, to be coupled in. The gas discharge develops in this case from the material that is vaporized off the surface of the electrode by the laser pulse and from the working gas 24 in the vacuum chamber 20. The pressure of the working gas 24 is determined predominantly by the gas inlet 23 and the vacuum pump 22. The laser pulse is conveyed directly, or by means of a glass fiber, from the laser to the beam-shaping optical system 26 by which the laser pulse is focused onto the surface of the electrodes. As a rule, the beam-shaping optical system 26 is arranged outside the vacuum chamber 20 in which the electrode system 21 of the EUV source is situated. At least one fixed window 27 that is transparent to the laser radiation therefore has to be present on the vacuum chamber at the point of coupling-in. A window of this kind is also necessary, in other regions of the vacuum chamber 20 if required, to enable various diagnostic procedures, such as for example a visual observation of the plasma generation by means of cameras, to take place. If other steps are not taken, the window quickly becomes coated with vaporized metal or electrode material and thus transmits increasingly smaller amounts of optical radiation. At least for a certain period, the loss can be compensated for by steadily increasing the energy of the laser pulses, but finally the window has to be replaced.

If a laser giving a beam of particularly good quality is used, a beam of a very small diameter can be produced by the beam-shaping optical system as early as at the coupling-in window 20. This being the case, the intensity of the laser beam 25 is therefore already sufficiently high at the coupling-in window 27 for absorbent material that has deposited there to be vaporized again. The window is thus cleaned by the laser pulses themselves. However, with this technique, the laser must have considerably more power in the pulse than is required for the production of the plasma. Also, this cleaning process is not uniform over the area of the window, which means that in time the profile of the beam alters. This affects the ablation process at the electrodes and impairs the stability of the EUV source. Other steps therefore have to be taken to lengthen the period of time after which the coupling-in window 27 has to be maintained or replaced.

In the present embodiment shown in Fig. 2, there is situated for this purpose, in front of the fixed window 27 that seals off the vacuum chamber 20, a larger rotating window 28. This rotating window 28 is screened off from the interior of the vacuum chamber 20 except for an orificed mask 29 that is needed for the laser beam to pass through. This rotating window 28 keeps the metal vapor released by the electrode system 21 away from the fixed window 27. As a result of the rotation of the window 28 about an axis of rotation 30, the metal vapor is distributed onto a larger area on the said second window 28, thus substantially increasing the life of the entire optical arrangement comprising the fixed coupling-in window 27 and the rotating window 28. The rotating window 28 is encapsulated in a separate housing 31, as can be seen from Fig. 2.

The orificed mask 29, which in the present embodiment forms part of the said housing 31, is of a conical form, and the orifice of the orificed mask is thus spaced appreciably away from the rotating window 28. In this way, a gas that produces a flow of gas towards the electrode system 21 can be introduced through a gas inlet 33 on the orificed mask. The orificed mask is produced to be of as small a diameter as possible, and this flow of gas in the orificed mask keeps out the metal vapor coming from the electrode system. This provision leads to an increased life for the optical elements of the arrangement. Rather than through the gas inlet 33, this gas may also enter though a gas inlet 32 on the housing. The gas may be identical to the working gas 24, such as argon for example, and should be so selected that it does not interfere with the production of the plasma.

In the embodiment shown in Fig. 2, magnets 40 can also be seen on the orificed mask 29. These magnets 40 produce a magnetic field in which the electrons and ions of the metal vapor coming from the electrode system 21 are diverted onto the walls of the orificed mask 29. These form thereon a deposit that does not interfere with the optical function of the two windows 27, 28.

Fig 2 also shows a gas outlet 34 on the housing 31. By means of this arrangement, a gas having a cleaning action can be admitted to the interior of the housing 31 through the gas inlet 32. If the metal vapor coming from the electrode system 21 is tin for example, then it is beneficial for halogens to be admitted as a cleaning gas. With the tin, these form volatile halogen compounds on the rotating window 28 and the fixed window 27.

The cleaning gas has to be kept away from the inlet into the vacuum chamber 20. This is achieved by means of a vacuum pump 35 at the gas outlet 34, which vacuum pump 34 produces a gas pressure lower than that in the vacuum chamber 20 in the region of the two windows 27, 28. The working gas that then flows through the funnel-shaped orificed mask 29 to the windows 27, 28 prevents the cleaning gas from escaping through the orificed mask.

The deposit of tin on the surfaces of the windows may be converted into tin oxide by small amounts of oxygen. This tin oxide cannot readily be cleaned off by halogens. It may therefore be advantageous for a flow of hydrogen gas, by which the oxide is first reduced, first to be fed in through the gas inlet 32 before the cleaning gas containing halogens is then conveyed in. However, at least a certain proportion of the hydrogen must be present in atomic form. This is achieved by the means 36 for forming radicals that is indicated in Fig. 2, at which means 36 the molecular hydrogen flowing past is dissociated into atomic hydrogen.

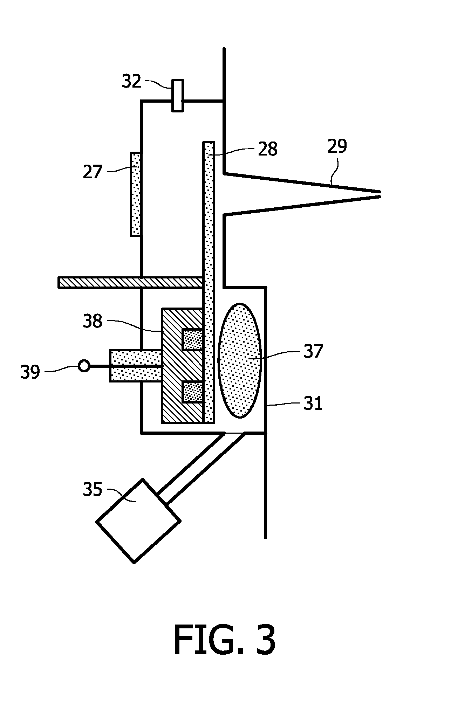

A further possible way of cleaning the surface of the rotating window 28 that is fouled by metal vapor making its way in through the orificed mask 29 is indicated in Fig. 3. In this embodiment, an additional gas discharge, a plasma 37, is triggered close to the surface of the rotating window 28, which means that the ions from this plasma discharge are accelerated towards the surface and the tin that deposits on the surface is at once sputtered off again. An arrangement of this kind may be combined with the rotating window 28 in such a way that the cleaning by sputtering takes place away from the region for the laser beam to pass through, as is shown in Fig. 3. In this case a pot-shaped magnet 38 may be arranged on one side of the rotating window 28 a short distance away therefrom. If a medium-frequency or high-frequency AC voltage 39 is applied to the magnet, a locally confined plasma 37 forms on the opposite side of the window 28. The ions that come into being in the plasma 37 of this barrier discharge immediately sputter off the fouling that has deposited on the surface of the window 28, which means that that region of the surface of the window 28 that moved past below the orificed mask 29 immediately beforehand is at once cleaned again. The combination of the gas inlet 32 and vacuum pump 35 produces a flow of gas that at once takes away the material that is sputtered off.

### LIST OF REFERENCE NUMERALS:

| | |
|---|---|
| 1 | Vacuum chamber |
| 2 | Electrodes in disc form |
| 3 | Axis of rotation |
| 4 | Baths of metal |
| 5 | Film of metal |
| 6 | Laser pulse |
| 7 | Insulated infeed |
| 8 | Bank of capacitors |
| 9 | Screening |
| 10 | Metal screening |
| 11 | Wiper |
| 12 | Temperature-control means |
| 13 | Foil trap |
| 20 | Vacuum chamber |
| 21 | Electrode system |
| 22 | Vacuum pump |
| 23 | Gas inlet |
| 24 | Working gas |
| 25 | Laser beam |
| 26 | Beam-shaping optical system |
| 27 | Fixed window |
| 28 | Rotating window |
| 29 | Orificed mask |
| 30 | Axis of rotation |
| 31 | Housing |
| 32 | Gas inlet |
| 33 | Gas inlet |
| 34 | Gas outlet |
| 35 | Vacuum pump |
| 36 | Means of producing radicals |
| 37 | Plasma |
| 38 | Pot-shaped magnet |
| 39 | AC voltage |
| 40 | Magnets |

## Claims

1. An arrangement for protecting an optical component (27) in or on a process chamber (1, 20), through which optical component optical radiation passes or by which optical component optical radiation is produced or reflected, having an optical plate (28) that is arranged in front of the optical component (27) and that is transparent to the optical radiation, and an orificed mask (29) that is arranged in front of the optical plate (28) and that has an orifice through which a region of the surface of the optical plate (28) is exposed on a preset axis of the beam of optical radiation, wherein the optical plate (28) is so mounted to be movable in translation and/or rotation, and is so coupled to a drive, that different regions of the surface are exposed in succession through the orifice of the orificed mask as a result of continuous or step-by-step movement of the optical plate (28), **characterised in that** remaining regions of the surface of the optical plate (28) are covered, on the orificed-mask side, by the orificed mask (29) and/or by other screening elements for protecting against fouling.

2. An arrangement as claimed in claim 1, **characterized in that** the optical plate (28) is in the form of a disc that is symmetrical in rotation and is mounted to be rotatable about an axis of rotation (30) that extends through the disc centrally.

3. An arrangement as claimed in claim 1 or 2, **characterized in that** the optical plate (28) is of an area that is a multiple of the area of the optical component (27).

4. An arrangement as claimed in any one of claims 1 to 3, **characterized in that** the optical component (27) is an optical entry and/or exit window of the process chamber (1) in which the optical plate (28) is arranged.

5. An arrangement as claimed in any one of claims 1 to 4, **characterized in that** the optical plate (28) is enclosed by a housing (31) that on one side forms the orificed mask (29) having the orifice of the orificed mask and on the opposite side is closed off by the optical component (27).

6. An arrangement as claimed in claim 5, **characterized in that** the housing (31) has a gas inlet (32) for the infeed of a gas.

7. An arrangement as claimed in claim 5 or 6, **characterized in that** the housing (31) has a gas outlet (34), which can be or is connected to a vacuum pump (35).

8. An arrangement as claimed in claim 6 or 7, **characterized in that** the optical component (27) and the optical plate (28) are coupled to a heating means.

9. An arrangement as claimed in any one of claims 6 to 8, **characterized in that** a means (36) for producing radicals is arranged in the housing (31).

10. An arrangement as claimed in any one of claims 6 to 9, **characterized in that** a means (38, 39) for producing a gas discharge (37) is so arranged in the housing (31) that the gas discharge (37) is formed, in the immediate vicinity of a surface of the optical plate (28) that is situated on the orificed-mask side, in a region that is situated off the axis of the beam and past which move, when the optical plate (28) is moved by the drive, regions of the surface that were previously exposed through the orifice of the orificed mask.

11. An arrangement as claimed in any one of claims 1 to 10, **characterized in that** the orificed mask (29) for the optical radiation forms a duct around the axis of the beam.

12. An arrangement as claimed in claim 11, **characterized in that** the duct becomes narrower in a funnel shape with increasing distance from the optical plate (28).

13. An arrangement as claimed in claim 11 or 12, **characterized in that** there is arranged in the region of the duct a means (40) of generating one or more magnetic fields that divert electrons and/or ions flowing in through the duct onto walls of the duct.

14. An arrangement as claimed in any one of claims 11 to 13, **characterized in that** a lateral gas inlet (33) is formed on the duct.

15. An arrangement as claimed in any one of claims 1 to 14 in a radiation source for EUV or soft X-ray radiation.

16. A method for protecting an optical component (27) in or on a process chamber (1), through which optical component optical radiation passes or by which optical component optical radiation is produced or reflected, in which an optical plate (28) that is arranged in front of the optical component (27), that is transparent to the optical radiation, and of which a region of the surface is exposed on a preset axis of the beam of optical radiation through an orificed mask (29) that is arranged in front of the optical plate (28) and that has an orifice, is so moved in translation and/or rotation that different regions of the surface of the optical plate (28) are exposed in succession through the orifice of the orificed mask, **characterised by** remaining regions of the surface of the optical plate (28) being covered, on the orificed-mask side, by the orificed mask (29) and/or by other screening elements for protecting against fouling.

17. A method as claimed in claim 16, **characterized in that** what is used as an optical plate (28) is a disc that is symmetrical in rotation and is moved in rotation about an axis of rotation (30) that extends through the disc centrally.

18. A method as claimed in claim 16 or 17, **characterized in that** what is used as an optical plate (28) is a plate of an area that is a multiple of the area of the optical component (27).

19. A method as claimed in any one of claims 16 to 18, **characterized in that**, via a gas inlet (32, 33) on a housing (31) enclosing the optical plate (28), which housing (31) on one side forms the orificed mask (29) having the orifice of the orificed mask and on the opposite side is closed off by the optical component (27), a gas is introduced to produce a flow of gas through the orifice of the orificed mask that prevents or reduces the entry of fouling matter through the orifice of the orificed mask and into the housing (31).

20. A method as claimed in any one of claims 16 to 18, **characterized in that**, via a gas inlet (32) on a housing (31) enclosing the optical plate (28), which housing (31) on one side forms the orificed mask (29) having the orifice of the orificed mask and on the opposite side is closed off by the optical component (27), a cleaning gas is introduced that, with fouling deposited on the optical plate (28) and on the optical component (27), forms volatile components that are extracted via a gas outlet (34) on the housing (31).

21. A method as claimed in claim 20, **characterized in that** the optical plate (28) and the optical component (27) are, in addition, heated to assist the vaporization of the volatile components.

22. A method as claimed in claim 20 or 21, **characterized in that**, when the fouling is metallic, a halogen-containing gas is introduced as the cleaning gas.

23. A method as claimed in claim 22, **characterized in that**, before the cleaning gas is introduced, hydrogen gas is introduced into the housing (31), from which hydrogen gas atomic hydrogen is formed by at least one means (36) for producing radicals that is arranged in the housing (31).

24. A method as claimed in any one of claims 16 to 18, **characterized in that**, in a housing (31) enclosing the optical plate (28), which housing (31) on one side forms the orificed mask (29) having the orifice of the orificed mask and on the opposite side is closed off by the optical component (27), there is produced, in the immediate vicinity of a surface of the optical plate (28) that is situated on the orificed-mask side, a gas discharge (37) for cleaning the surface, in a region that is situated off the axis of the beam and past which move, when the optical plate (28) is moved, regions of the surface that were previously exposed through the orifice of the orificed mask.

## Patentansprüche

1. Anordnung zum Schutz eines optischen Bauteils (27) in oder auf einer Prozesskammer (1, 20), durch die die optische Strahlung des optischen Bauteils verläuft, oder durch die die optische Strahlung des optischen Bauteils erzeugt oder reflektiert wird, die eine optische Platte (28) aufweist, die vor dem optischen Bauteil (27) angeordnet ist, und die für die optische Strahlung transparent ist, und eine gebohrte Maske (29), die vor der optischen Platte (28) angeordnet ist, und die eine Bohrung aufweist, durch sie eine Region der Oberfläche der optischen Platte (28) auf einer voreingestellten Achse des Strahls der optischen Strahlung ausgesetzt ist, wobei die optische Platte (28) auch montiert ist, um in Translation und/oder Drehung beweglich zu sein, und so an einen Antrieb gekoppelt ist, dass verschiedene Regionen der Oberfläche aufeinander folgend durch die Bohrung der gebohrten Maske als Ergebnis einer kontinuierlichen oder schrittweisen Bewegung der optischen Platte (28) ausgesetzt sind, **dadurch gekennzeichnet, dass** die verbleibenden Regionen der Oberfläche der optischen Platte (28) auf der Seite der gebohrten Maske durch die gebohrte Maske (29) und/oder durch andere abschirmende Elemente zum Schutz gegen Verschmutzungen abgedeckt sind.

2. Anordnung nach Anspruch 1, **dadurch gekennzeichnet, dass** die optische Platte (28) die Form einer Scheibe aufweist, die in Drehung symmetrisch ist, und die montiert ist, um um eine Drehachse (30) drehbar zu sein, die sich in der Mitte durch die Scheibe erstreckt.

3. Anordnung nach Anspruch 1 oder 2, **dadurch gekennzeichnet, dass** die optische Platte (28) einen Bereich aufweist, der ein Vielfaches des Bereichs des optischen Bauteils (27) ist.

4. Anordnung nach einem der Ansprüche 1 bis 3, **dadurch gekennzeichnet, dass** der optische Bauteil (27) ein optisches Ein- und/oder Ausgangsfenster der Prozesskammer (1) ist, in der die optische Platte (28) angeordnet ist.

5. Anordnung nach einem der Ansprüche 1 bis 4, **dadurch gekennzeichnet, dass** die optische Platte (28) von einem Gehäuse (31) eingeschlossen ist, das auf der einen Seite die gebohrte Maske (29) bildet, die eine Bohrung der gebohrten Maske aufweist und auf der gegenüber liegenden Seite durch die optische Element (27) abgeschlossen ist.

6. Anordnung nach Anspruch 5, **dadurch gekennzeichnet, dass** das Gehäuse (31) einen Gaseinlass (32) für die Zufuhr von Gas aufweist.

7. Anordnung nach Anspruch 5 oder 6, **dadurch gekennzeichnet, dass** das Gehäuse (31) einen Gasauslass (34) aufweist, der mit einer Vakuumpumpe (35) verbunden sein kann oder damit verbunden ist.

8. Anordnung nach Anspruch 6 oder 7, **dadurch gekennzeichnet, dass** der optische Bauteil (27) oder die optische Platte (28) mit einem Heizungsmittel gekoppelt sind.

9. Anordnung nach einem der Ansprüche 6 bis 8, **dadurch gekennzeichnet, dass** ein Mittel (36) zur Erzeugung von Radikalen im Gehäuse (31) angeordnet ist.

10. Anordnung nach einem der Ansprüche 6 bis 9, **dadurch gekennzeichnet, dass** ein Mittel (38, 39) zur Erzeugung einer Gasentladung (37) so im Gehäuse (31) angeordnet ist, dass die Gasentladung (37), in der unmittelbaren Nachbarschaft einer Oberfläche der optischen Platte (28), die sich auf der Seite der gebohrten Maske befindet, in einer Region gebildet wird, die sich entfernt von der Achse des Strahls befindet, und an der sich, wenn die optische Platte (28) vom Antrieb bewegt wird, Regionen der Oberfläche vorbeibewegen, die zuvor durch die Bohrung der gebohrten Maske, ausgesetzt waren.

11. Anordnung nach einem der Ansprüche 1 bis 10, **dadurch gekennzeichnet, dass** die gebohrte Maske (29) für die optische Strahlung eine Leitung um die Achse des Strahls bildet.

12. Anordnung nach Anspruch 11, **dadurch gekennzeichnet, dass** die Leitung mit sich erhöhendem Abstand von der optischen Platte (28) in einer Trichterform enger wird.

13. Anordnung nach Anspruch 11 oder 12, **dadurch gekennzeichnet, dass** in der Region der Leitung ein Mittel (40) zur Erzeugung von einem oder von mehreren Magnetfeldern angeordnet ist, die Elektronen und/oder Ionen, die durch die Leitung einfließen, auf Wände der Leitung umleiten.

14. Anordnung nach einem der Ansprüche 11 bis 13, **dadurch gekennzeichnet, dass** ein seitlicher Gaseinlass (33) in der Leitung gebildet ist.

15. Anordnung nach einem der Ansprüche 1 bis 14 in einer Strahlungsquelle für EUV- oder sanfte Röntgenstrahlung.

16. Verfahren zum Schutz eines optischen Bauteils (27) in oder auf einer Prozesskammer (1), durch die optische Strahlung des optischen Bauteils verläuft, oder durch die optische Strahlung des optischen Bauteils erzeugt oder reflektiert wird, wobei eine optische Platte (28), die vor dem optischen Bauteil (27) angeordnet ist, die für die optische Strahlung transparent ist, und von der eine Region der Oberfläche auf einer voreingestellten Achse des Strahls von optischer Strahlung durch eine gebohrte Maske (29) ausgesetzt ist, die vor der optischen Platte (28) angeordnet ist, und die eine Bohrung aufweist, so in Translation und/oder Drehung bewegt wird, dass verschiedene Regionen der Oberfläche der optischen Platte (28) aufeinander folgend durch die Bohrung der gebohrten Maske ausgesetzt sind, **dadurch gekennzeichnet, dass** die verbleibenden Regionen der Oberfläche der optischen Platte (28) auf der Seite der gebohrten Maske durch die gebohrte Maske (29) und/oder durch andere abschirmende Elemente zum Schutz gegen Verschmutzungen abgedeckt sind.

17. Verfahren nach Anspruch 16, **dadurch gekennzeichnet** durch, dass das, was als eine optische Platte (28) verwendet wird, eine Scheibe ist, die in Drehung symmetrisch ist, und die und in Drehung um eine Drehachse (30) bewegt wird, die sich in der Mitte durch die Scheibe erstreckt.

18. Verfahren nach Anspruch 16 oder 17, **dadurch gekennzeichnet** durch, dass das, was als optische Platte (28) verwendet wird, eine Platte mit einem Bereich ist, der ein Vielfaches des Bereichs des optischen Bauteils (27) ist.

19. Verfahren nach einem der Ansprüche 16 bis 18, **dadurch gekennzeichnet, dass** über einen Gaseinlass (32, 33) auf einem Gehäuse (31), das die optische Platte (28) umschließt, wobei das Gehäuse (31) auf einer Seite die gebohrte Maske (29) bildet, die die Bohrung der gebohrten Maske aufweist, und auf der gegenüber liegenden Seite vom optischen Bauteil (27) abgeschlossen ist, ein Gas eingeführt wird, um einen Gasfluss durch die Bohrung der gebohrten Maske zu erzeugen, der den Eintritt von verschmutzendem Material durch die Bohrung der gebohrten Maske und in das Gehäuse (31) verhindert oder reduziert.

20. Verfahren nach einem der Ansprüche 16 bis 18, **dadurch gekennzeichnet, dass** über einen Gaseinlass (32) auf einem Gehäuse (31), das die optische Platte (28) umschließt, wobei das Gehäuse (31) auf einer Seite die gebohrte Maske (29) bildet, die die Bohrung der gebohrten Maske aufweist, und auf der gegenüber liegenden Seite vom optischen Bauteil (27) abgeschlossen ist, ein Reinigungsgas eingeführt wird, das, wenn Verunreinigungen auf der optischen Platte (28) und auf dem optischen Bauteil (27) abgelagert sind, flüchtige Komponenten bildet, die über einen Gasauslass (34) auf dem Gehäuse (31) extrahiert werden.

21. Verfahren nach Anspruch 20, **dadurch gekennzeichnet** durch, dass die optische Platte (28) und der optische Bauteil (27) außerdem erhitzt werden, um die Verdampfung der flüchtigen Komponenten zu unterstützen.

22. Verfahren nach Anspruch 20 oder 21, **dadurch gekennzeichnet** durch, dass, wenn die Verschmutzung metallisch ist, ein Halogen enthaltende Gas als Reinigungsgas eingeführt wird.

23. Verfahren nach Anspruch 22, **dadurch gekennzeichnet** durch, dass, bevor das Reinigungsgas eingeführt wird, Wasserstoffgas in das Gehäuse (31) eingeführt wird, aus dem atomarer Wasserstoff von Wasserstoffgas durch mindestens ein Mittel (36) gebildet wird, um Radikale zu erzeugen, das im Gehäuse (31) angeordnet ist.

24. Verfahren nach einem der Ansprüche 16 bis 18, **dadurch gekennzeichnet, dass** in einem Gehäuse (31), das die optische Platte (28) einschließt, wobei das Gehäuse (31) auf einer Seite die gebohrte Maske (29) bildet, die die Bohrung der gebohrten Maske aufweist, und auf der gegenüber liegenden Seite vom optischen Bauteil (27) abgeschlossen ist, in der unmittelbaren Nachbarschaft einer Oberfläche der optischen Platte (28), die sich auf der Seite der gebohrten Maske befindet, eine Gasentladung (37) zur Reinigung der Oberfläche in einer Region gebildet wird, die sich entfernt von der Achse des Strahls befindet, und an der sich, wenn die optische Platte (28) bewegt wird, Regionen der Oberfläche vorbeibewegen, die zuvor durch die Bohrung der gebohrten Maske ausgesetzt waren.

## Revendications

1. Agencement pour protéger un composant optique (27) dans ou sur une chambre de traitement (1, 20), à travers lequel composant optique un rayonnement optique passe ou par lequel composant optique un rayonnement optique est produit ou réfléchi, comportant une plaque optique (28) qui est agencée devant le composant optique (27) et qui est transparente au rayonnement optique, et un masque à orifice (29) qui est agencé devant la plaque optique (28) et qui comporte un orifice à travers lequel une région de la surface de la plaque optique (28) est exposée sur un axe préréglé du faisceau de rayonnement optique, dans lequel la plaque optique (28) est montée pour être mobile en translation et/ou en rotation, et est accouplée à un entraînement, pour que des régions différentes de la surface soient exposées en succession à travers l'orifice du masque à orifice en conséquence du mouvement continu ou progressif de la plaque optique (28), **caractérisé en ce que** les régions restantes de la surface de la plaque optique (28) sont couvertes, sur le côté masque à orifice, par le masque à orifice (29) et/ou par d'autres éléments de protection pour protéger contre la salissure.

2. Agencement selon la revendication 1, **caractérisé en ce que** la plaque optique (28) est sous forme d'un disque qui est symétrique en rotation et est monté pour être rotatif autour d'un axe de rotation (30) qui s'étend à travers le disque de façon centrale.

3. Agencement selon la revendication 1 ou 2, **caractérisé en ce que** la plaque optique (28) est d'une superficie qui est un multiple de la superficie du composant optique (27).

4. Agencement selon l'une quelconque des revendications 1 à 3, **caractérisé en ce que** le composant optique (27) est une fenêtre d'entrée et/ou de sortie optique de la chambre de traitement (1) dans laquelle la plaque optique (28) est agencée.

5. Agencement selon l'une quelconque des revendications 1 à 4, **caractérisé en ce que** la plaque optique (28) est enfermée par un logement (31) qui, sur un côté, forme le masque à orifice (29) comportant l'orifice du masque à orifice et, sur le côté opposé, est fermé par le composant optique (27).

6. Agencement selon la revendication 5, **caractérisé en ce que** le logement (31) comporte une entrée de gaz (32) pour l'alimentation en un gaz.

7. Agencement selon la revendication 5 ou 6, **caractérisé en ce que** le logement (31) comporte une sortie de gaz (34), qui peut être ou est raccordée à une pompe à vide (35).

8. Agencement selon la revendication 6 ou 7, **caractérisé en ce que** le composant optique (27) et la plaque optique (28) sont accouplés à un moyen chauffant.

9. Agencement selon l'une quelconque des revendications 6 à 8, **caractérisé en ce qu'**un moyen (36) pour produire des radicaux est agencée dans le logement (31).

10. Agencement selon l'une quelconque des revendications 6 à 9, **caractérisé en ce qu'**un moyen (38, 39) pour produire une décharge de gaz (37) est agencé dans le logement (31) pour que la décharge de gaz (37) soit formée, dans le voisinage immédiat d'une surface de la plaque optique (28), qui est située sur le côté masque à orifice, dans une région qui est située de façon décalée par rapport à l'axe du faisceau et au-delà de laquelle se déplacent, lorsque la plaque optique (28) est déplacée par l'entraînement, des régions de la surface qui étaient auparavant exposées à travers l'orifice du masque à orifice.

11. Agencement selon l'une quelconque des revendications 1 à 10, **caractérisé en ce que** le masque à orifice (29) pour le rayonnement optique forme un conduit autour de l'axe du faisceau.

12. Agencement selon la revendication 11, **caractérisé en ce que** le conduit devient plus étroit en une forme d'entonnoir avec une distance de plus en plus grande à partir de la plaque optique (28).

13. Agencement selon la revendication 11 ou 12, **caractérisé en ce qu'**est agencé, dans la région du conduit, un moyen (40) de génération d'un ou de plusieurs champs magnétiques qui dévient des électrons et/ou des ions entrant à travers le conduit sur des parois du conduit.

14. Agencement selon l'une quelconque des revendications 11 à 13, **caractérisé en ce qu'**une entrée de gaz latérale (33) est formée sur le conduit.

15. Agencement selon l'une quelconque des revendications 1 à 14, dans une source de rayonnement pour rayonnement EUV ou rayons X mous.

16. Procédé pour protéger un composant optique (27) dans ou sur une chambre de traitement (1), à travers lequel composant optique un rayonnement optique passe ou par lequel composant optique un rayonnement optique est produit ou réfléchi, dans lequel une plaque optique (28) qui est agencée devant le composant optique (27), est transparente au rayonnement optique, et dont une région de la surface est exposée sur un axe préréglé du faisceau de rayonnement optique à travers un masque à orifice (29), qui est agencé devant la plaque optique (28) et qui comporte un orifice, est déplacée en translation et/ou en rotation pour que des régions différentes de la surface de la plaque optique (28) soient exposées en succession à travers l'orifice du masque à orifice, **caractérisé en ce que** les régions restantes de la surface de la plaque optique (28) sont couvertes, sur le côté masque à orifice, par le masque à orifice (29) et/ou par d'autres éléments de protection pour protéger contre la salissure.

17. Procédé selon la revendication 16, **caractérisé en ce que** ce qui est utilisé en tant que plaque optique (28) est un disque qui est symétrique en rotation et est déplacé en rotation autour d'un axe de rotation (30) qui s'étend à travers le disque de façon centrale.

18. Procédé selon la revendication 16 ou 17, **caractérisé en ce que** ce qui est utilisé en tant que plaque optique (28) est une plate d'une superficie qui est un multiple de la superficie du composant optique (27).

19. Procédé selon l'une quelconque des revendications 16 à 18, **caractérisé en ce que**, par l'intermédiaire d'une entrée de gaz (32, 33) sur un logement (31) enfermant la plaque optique (28), lequel logement (31), sur un côté, forme le masque à orifice (29) comportant l'orifice du masque à orifice et, sur le côté opposé, est fermé par le composant optique (27), un gaz est introduit pour produire un écoulement de gaz à travers l'orifice du masque à orifice qui empêche ou réduit l'entrée de matière salissante à travers l'orifice du masque à orifice et dans le logement (31).

20. Procédé selon l'une quelconque des revendications 16 à 18, **caractérisé en ce que**, par l'intermédiaire d'une entrée de gaz (32) sur un logement (31) enfermant la plaque optique (28), lequel logement (31), sur un côté, forme le masque à orifice (29) comportant l'orifice du masque à orifice et, sur le côté opposé, est fermé par le composant optique (27), un gaz nettoyant est introduit qui, avec de la salissure déposée sur la plaque optique (28) et sur le composant optique (27), forme des composants volatils qui sont extraits par l'intermédiaire d'une sortie de gaz (34) sur le logement (31).

21. Procédé selon la revendication 20, **caractérisé en ce que** la plaque optique (28) et le composant optique (27) sont, en outre, chauffés pour assister la vaporisation des composants volatils.

22. Procédé selon la revendication 20 ou 21, **caractérisé en ce que**, lorsque la salissure est métallique, un gaz contenant de l'halogène est introduit en tant que gaz nettoyant.

23. Procédé selon la revendication 22, **caractérisé en ce que**, avant que le gaz nettoyant soit introduit, un hydrogène gazeux est introduit dans le logement (31), à partir duquel hydrogène gazeux de l'hydrogène atomique est formé par au moins un moyen (36), pour produire des radicaux, qui est agencé dans le logement (31).

24. Procédé selon l'une quelconque des revendications 16 à 18, **caractérisé en ce que**, dans un logement (31) enfermant la plaque optique (28), lequel logement (31), sur un côté, forme le masque à orifice (29) comportant l'orifice du masque à orifice et, sur le côté opposé, est fermé par le composant optique (27), est produite, dans le voisinage immédiat d'une surface de la plaque optique (28), qui est située sur le côté masque à orifice, une décharge de gaz (37) pour nettoyer la surface, dans une région qui est située de façon décalée par rapport à l'axe du faisceau et au-delà de laquelle se déplacent, lorsque la plaque optique (28) est déplacée, des régions de la surface qui ont auparavant été exposées à travers l'orifice du masque à orifice.
